# EUROPEAN PATENT SPECIFICATION

(11) **EP 4 395 060 B1**
(45) Date of publication and mention of the grant of the patent: **14.10.2026**
(21) Application number: 22948875.4
(22) Date of filing: 29.08.2022
(51) Int. Cl.: H01M 50/15, H01M 50/528, H01M 50/533, H01M 50/586, H01M 50/593, H01M 50/627

(54) **BATTERY CELL, BATTERY, AND ELECTRIC DEVICE**
BATTERIEZELLE, BATTERIE UND ELEKTRISCHE VORRICHTUNG
ÉLÉMENT DE BATTERIE, BATTERIE ET DISPOSITIF ÉLECTRIQUE

(30) Priority: 28.06.2022 CN 202221624387 U
(43) Date of publication of application: 03.07.2024
(73) Proprietor: Contemporary Amperex Technology (Hong Kong) Limited, Central, Central And Western District (HK)
(72) Inventor: WANG, Xihui, Ningde City, Fujian 352100 (CN); XU, Wenzhu, Ningde City, Fujian 352100 (CN)
(74) Representative: Holt, Lucy Rose
(86) International application number: PCT/CN2022/115560
(87) International publication number: WO 2024/000785

(56) References cited:
- CN-A- 106 207 070
- CN-U- 210 743 995
- CN-U- 210 743 995
- CN-U- 213 583 958
- CN-U- 214 672 774
- JP-A- 2014 107 147
- KR-A- 20070 082 943
- US-A1- 2013 040 178
- US-B1- 6 432 578

## Description

### TECHNICAL FIELD

The present application relates to the technical field of battery, and in particular to a battery cell, a battery and an electricity consuming apparatus.

### BACKGROUND

Energy conservation and emission reduction are key to the sustainable development of the automotive industry, and the electric vehicle has become an important component of the sustainable development of the automotive industry due to its advantage in energy conservation and environmental protection. For the electric vehicle, battery technology is also an important factor related to its development.

With increasing demand for power of battery in the market, people have improved the power of the battery by increasing the current-flowing area between the tab and the electrode plate. However, the performance of this type of battery still needs to be improved. US 2013/040178 A1 discloses a rechargeable battery includes a plurality of electrode assemblies including positive and negative electrodes separated by a separator and a pair of electrode tabs protruding to both sides. US 6 432 578 B1 discloses a sealed cell which can prevent disconnection of a current collector tab inside the cell and improve reliability, even when shock such as a drop of the cell is applied to the cell. CN 210 743 995 U discloses a battery cell, a battery module, a battery pack and a device.

### SUMMARY

The present application provides a battery cell, a battery and an electricity consuming apparatus that can improve battery performance.

In a first aspect, the present application provides a battery cell including a cap assembly and an electrode assembly, the cap assembly includes a cap plate and an isolation member, and the isolation member is disposed on one side of the cap plate; the electrode assembly is disposed on a side of the isolation member facing away from the cap plate, the electrode assembly includes an electrode body and tabs protruding from the electrode body, a protrusion connected with the electrode body is connected on a peripheral side of at least one of the tabs; wherein a clearance groove is provided on a surface of the isolation member facing away from the cap plate, and is configured to accommodate at least a portion of the protrusion.

In the technical solution of the embodiment of the present application, the cap assembly includes the cap plate and the isolation member, and the isolation member is disposed on one side of the cap plate; the electrode assembly is disposed on the side of the isolation member facing away from the cap plate, that is, the isolation member is disposed between the cap plate and the electrode assembly, improving the short-circuit connection between the cap plate and the electrode assembly. The electrode assembly includes the electrode body and tabs protruding from the electrode body, the protrusion connected with the electrode body is connected on the peripheral side of at least one of the tabs, increasing the current-flowing area between the tab and the electrode body; the clearance groove is provided on the surface of the isolation member facing away from the cap plate, and accommodates at least a portion of the protrusion, improving the problem of insertion of the tab caused by the interference of the isolation member with the protrusion, improving the cooperation relationship between the isolation member and the tab, and improving battery performance.

In some embodiments, at least a portion of an inner wall surface of the clearance groove abuts against an outer surface of the protrusion.

In the technical solution of the embodiment of the present application, at least a portion of the inner wall surface of the clearance groove abuts against the outer surface of the protrusion, allowing the isolation member to limit the position of the protrusion, and improving the problem of short-circuit connection in the battery caused by misalignment of the protrusion under the action of external force.

In some embodiments, in a direction from the cap plate to the isolation member, a depth L1 of the clearance groove accounts for 20% - 80% of a thickness L of the isolation member.

In the technical solution of the embodiment of the present application, the depth L1 of the clearance groove accounts for 20% - 80% of the thickness L of the isolation member, preventing the clearance groove from interfering with the protrusion due to the depth L1 of the clearance groove being too small, and also improving the insufficient limiting effect of the clearance groove on the position of the protrusion due to the depth of the clearance groove being too excessive.

In some embodiments, in a direction from the cap plate to the isolation member, an orthographic projection of the clearance groove coincides with an orthographic projection of the protrusion.

In the technical solution of the embodiment of the present application, the orthographic projection of the clearance groove coincides with the orthographic projection of the protrusion, and the outer surface of the protrusion abuts fully against the clearance groove, so the clearance groove has a greater limiting effect on the position of the protrusion.

In some embodiments, two or more clearance grooves spaced apart in a first direction are provided on the side of the isolation member facing away from the cap plate; and the electrode assembly is provided with two or more protrusions spaced apart in the first direction, each of the protrusions is located correspondingly in each of the clearance grooves; or the electrode assembly is provided with one protrusion, and the one protrusion is located in one of the clearance grooves.

In the technical solution of the embodiment of the present application, two or more clearance grooves spaced apart along the first direction are provided on the side of the isolation member facing away from the cap plate; the electrode assembly is provided with two or more protrusions spaced apart along the first direction, and each of the protrusions is correspondingly located in each of the clearance grooves; alternatively, the electrode body is provided with one protrusion, and the one protrusion is located in one of the clearance grooves. With such an arrangement, the clearance groove disposed may be compatible with various protrusions, improving the compatibility of the isolation member.

In some embodiments, a distance between the two clearance grooves in the first direction is at least 20% of a length of the cap assembly.

In the technical solution of the embodiment of the present application, the distance between the two clearance grooves is at least 20% of the length of the cap assembly, preventing a short-circuit connection in the battery due to the electrode body being misaligned, which is caused by the distance between the two clearance grooves being too small and the fixing capacity of the isolation member on the electrode body being insufficient.

In some embodiments, the two clearance grooves are symmetrically disposed relative to an axis extending in a second direction, and the first direction intersects with the second direction.

In the technical solution of the embodiment of the present application, the symmetrically disposed clearance groove has low machining difficulty and is convenient for manufacturing.

In some embodiments, the isolation member is provided with an abutment portion protruding toward the electrode assembly, the abutment portion is configured to abut against the electrode body, and the clearance groove is disposed at the abutment portion.

In the technical solution of the embodiment of the present application, the isolation member includes the abutment portion protruding toward the electrode assembly, and the abutment portion abuts against the electrode body, improving the problem of short circuit in the battery caused by misalignment of the electrode body under the action of external force.

In some embodiments, the isolation member further includes a liquid injection hole disposed to be penetrated, and the liquid injection hole is staggered with the clearance groove.

In the technical solution of the embodiment of the present application, the liquid injection hole is configured to fill the electrolyte into the electrode assembly, and the liquid injection hole is staggered with the clearance groove, preventing the protrusion from blocking the liquid injection hole.

In some embodiments, the battery cell further includes a connector, which is connected to the tab and is staggered with the clearance groove.

In the technical solution of the embodiment of the present application, the connector is connected to the tab, and the connector is staggered with the clearance groove, preventing the possibility of the clearance groove not being able to abut against the protrusion due to a portion of the connector entering the clearance groove.

In some embodiments, the battery cell further includes a connector, which is connected to the protrusion, and at least a portion of the connector is located in the clearance groove.

In the technical solution of the embodiment of the present application, the connector is connected to the protrusion, and at least a portion of the connector is located in the clearance groove, ensuring that the isolation member does not interfere with the protrusion via the connector.

In some embodiments, the clearance groove is disposed between two tabs adjacent in the first direction.

In the technical solution of the present application embodiment, the clearance groove is disposed between two tabs adjacent in the first direction, reducing process difficulty and saving the cost.

In some embodiments, the battery cell further includes an explosion proof valve hole penetrating through the cap plate, the isolation member is provided with a vent hole in communication with the explosion proof valve hole, and the vent hole is staggered with the clearance groove.

In the technical solution of the present application embodiment, the isolation member is provided with the vent hole in communication with the explosion proof valve hole, and the explosion proof valve will not affect the breathability of the vent hole; the vent hole is staggered with the clearance groove, preventing the protrusion from affecting the gas exhaust of electrode assembly through the vent hole.

In a further aspect, the present application also provides a battery, including the battery cell in any of the embodiments mentioned above in the first aspect.

In another aspect, the present application also provides an electricity consuming apparatus, including the battery in the above embodiment, and the battery is configured to supply electric power.

The above description is only an overview of the technical solution of the present application. In order to understand the technical means of the present application more clearly to implement the present application in accordance with the content of the specification, and in order to make the above and other purposes, features, and advantages of the present application more understandable, the specific implementations of the present application are hereby listed. The invention is defined by the independent claims.

### BRIEF DESCRIPTION OF THE DRAWINGS

The features, advantages, and technical effects of exemplary embodiments of the present application will be described below with reference to the accompanying drawings.
Fig. 1 shows a structural schematic diagram of a conventional battery cell in related art;
Fig. 2 shows a structural schematic diagram of a vehicle provided in an embodiment of the present application;
Fig. 3 shows a structural schematic diagram of a battery module provided in an embodiment of the present application;
Fig. 4 shows a structural schematic diagram of a battery module provided in an embodiment of the present application;
Fig. 5 shows a structural schematic diagram of a battery cell provided in an embodiment of the present application;
Fig. 6 shows a structural schematic diagram of a battery cell provided in an embodiment of the present application;
Fig. 7 shows a structural schematic diagram of another battery cell provided in an embodiment of the present application;
Fig. 8 shows a structural schematic diagram of another battery cell provided in an embodiment of the present application;
Fig. 9 shows a structural schematic diagram of another battery cell provided in an embodiment of the present application;
Fig. 10 shows a structural schematic diagram of an isolation member of another battery cell provided in an embodiment of the present application;
Fig. 11 shows a structural schematic diagram of another battery cell provided in an embodiment of the present application;
Fig. 12 shows a structural schematic diagram of another battery cell provided in an embodiment of the present application;
Fig. 13 shows a structural schematic diagram of a cap assembly of a battery cell provided in an embodiment of the present application; and
Fig. 14 shows a structural schematic diagram of an isolation member of a battery cell provided in an embodiment of the present application.

In the drawings, the figures are not drawn to actual scale.

### Description of reference numerals:

1 vehicle, 2 battery, 101 motor, 102 controller, 202 housing, 2021 first housing portion, 2022 second housing portion, 201 battery module, 3 battery cell, 3' conventional battery cell, 4 casing, 5 electrode assembly, 51 electrode body, 52 tab, 61 electrode terminal, 6 cap assembly, 6' conventional cap assembly, 62 cap plate, 63 isolation member, 63' conventional isolation member, 521 protrusion, 631 clearance groove, 632 elastic member, 633 liquid injection hole, 64 connector, 65 explosion proof valve hole, 634 vent hole, 635 abutment portion.

### DETAILED DESCRIPTION

Implementations of the present application will be described in further detail below in conjunction with the drawings and the embodiments. The detailed description of the following embodiments and drawings are used to exemplarily illustrate the principle of the present application, but cannot be used to limit the scope of the present application, in other words, the present application is not limited to the described embodiments.

In the description of the present application, it should be noted that, unless otherwise specified, "plurality" means two or more; the terms "upper", "lower", "left", "right", "inner", "outer", etc. indicate the orientation or positional relationship, only for convenience of describing the present application and simplifying the description, rather than indicating or implying that the involved device or assembly must have a specific orientation, be configured and operated in a specific orientation, and therefore cannot be understood as a limitation of the present application. In addition, the terms "first", "second" and the like are only used for descriptive purposes, and cannot be understood as indicating or implying relative importance. The term "perpendicular" need not to be strictly perpendicular, but allows an error within an allowable range. The term "parallel" need not to be strictly parallel, but allows an error within an allowable range.

The "embodiments" mentioned in the present application means that specific features, structures or characteristics described in conjunction with the embodiments may be included in at least one embodiment of the present application. This phrase appearing in various places in the description does not necessarily refer to the same embodiment, nor does it refer to an independent or alternative embodiment mutually exclusive with other embodiments. It is understood explicitly and implicitly by those skilled in the art that the embodiments described in the present application may be combined with other embodiments.

In the description of the present application, it should also be noted that, unless otherwise clearly specified and limited, the terms "mounted", "connected to" and "connected with" should be understood in a broad sense, for example, it may be a fixed connection, a detachable connection or an integral connection, it may be a direct connection, or it may be an indirect connection through intermediate media. For those ordinarily skilled in the art, the specific meaning of the above mentioned terms in the present application can be understood according to specific situations.

Nowadays, power batteries are becoming increasingly applied seen from the development of the market situation. The power batteries are not only used in energy storage power systems such as hydropower, firepower, wind power, and solar power plants, but also widely used in electric vehicles such as electric bicycles, electric motorcycles, and electric automobiles, as well as in various fields such as military equipment and aerospace. With the continuous expanding application of power batteries, their market demands are also constantly expanding.

In the present application, a battery cell may include a lithium-ion secondary battery cell, a lithium-ion primary battery cell, a lithium-sulfur battery cell, a sodium lithium ion battery cell, a sodium ion battery cell, a magnesium ion battery cell or the like, which is not limited in the embodiments of the present application. The battery cell may be in a shape of a cylinder, a flatten body, a cuboid or other shapes, which is not limited in the embodiments of the present application.

The battery mentioned in the embodiments of the present application refers to a single physical module that includes one or more battery cells to provide higher voltage and capacity. For example, the battery mentioned in the present application may include a battery module, a battery pack or the like. The battery generally includes a housing for packaging one or more battery cells. The housing can prevent liquid or other foreign objects from affecting the electrical charge or the electrical discharge of the battery cell.

The battery cell includes an electrode assembly and an electrolyte, and the electrode assembly includes a positive electrode plate, a negative electrode plate and a separator. The battery cell mainly relies on the movement of metal ions between the positive electrode plate and the negative electrode plate to operate. The positive electrode plate includes a positive current connector and a positive active material layer, and the positive active material layer is applied on a surface of the positive current connector. The positive current collector includes a positive current collecting portion and a positive tab connected to the positive current collecting portion, the positive current collecting portion is coated with the positive active material layer, while the positive tab is not coated with the positive active material layer. Taking a lithium-ion battery as an example, a material for the positive current collector may be aluminum, the positive active material layer may include the positive active material, and the positive active material may be lithium cobalt oxide, lithium iron phosphate, ternary lithium, lithium manganese oxide, or the like. The negative electrode plate includes a negative current collector and a negative active material layer, and the negative active material layer is applied on a surface of the negative current collector. The negative current collector includes a negative current collecting portion and a negative tab connected to the negative collecting portion, the negative current collecting portion is coated with the negative active material layer, while the negative tab is not coated with the negative active material layer. A material for the negative current collector may be copper, the negative active material layer may include the negative active material, and the negative active material may be carbon, silicon, or the like. A material of the separator may be PP (polypropylene), PE (polyethylene) or the like.

With increasingly widespread application of battery in people's daily life, people have put forward higher requirements for the power of battery. People have found that the weak current-flowing capacity at the tab is one of the reasons that restricts the improvement of the power of the battery. Therefore, the current-flowing area between the tab and the electrode plate may be increased by providing a protrusion on the tab and by adjusting the width of the protrusion, achieving the object of improving the power of the battery.

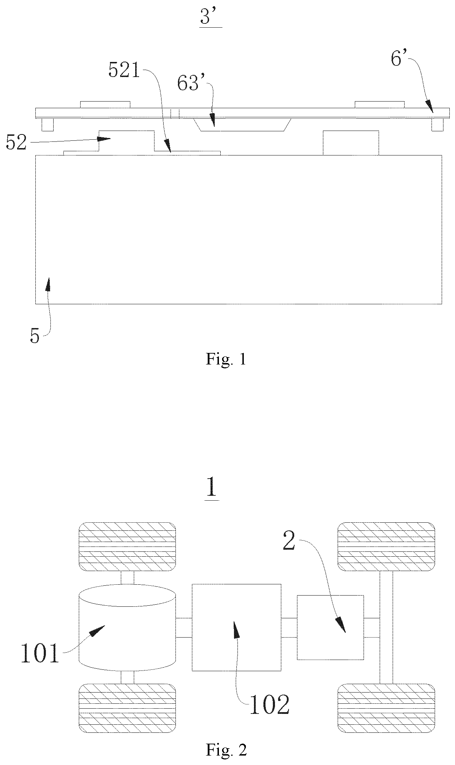

Please refer to Fig. 1, and Fig. 1 shows a structural schematic diagram of a conventional battery cell 3' in related art.

The inventors found that some conventional battery cells 3' have experienced performance degradation such as insertion of the tab 52, short circuit, or the like.

In order to alleviate the problem of degradation of battery performance, the inventors found through research that the problem of degradation of battery performance is caused by the interference of the conventional cap assembly 6' with the protrusion 53. After adding the protrusion 521, the current-flowing capacity of the tab has been improved, but the conventional cap assembly 6' did not undergo adaptive adjustment. This results in that the electrode assembly 5 does not match well with the conventional cap assembly 6'. The conventional isolation member 63' of the conventional cap assembly 6' may interfere with the protrusion 521, and under the action of external forces, such as during assembly or transportation, the protrusion 521 of the central structure of the conventional isolation member 63' may be squeezed by the conventional isolation member 63' to be deformed or inserted into the electrode body 51, causing the phenomena of degradation of battery performance such as insertion of the tab 52, short circuit, or the like.

In view of the above considerations, in order to improve the problem of degradation of battery performance such as insertion of the tab 52, short circuit, or the like, the inventors have conducted in-depth research and designed a battery cell. In such a battery cell, a clearance groove is provided on a surface of the isolation member facing away from the cap plate, and the clearance groove is configured to accommodate at least a portion of the protrusion 521. The clearance groove reduces the interference degree of the isolation member with the protrusion, improves the problem of insertion of the tab 52 caused by the interference of the isolation member with the protrusion 521, improves the cooperation relationship between the isolation member and the tab 52, and improves battery performance.

The technical solution described in the embodiments of the present application is applicable to an electricity consuming apparatus using the battery.

The electricity consuming apparatus may be a vehicle, a mobile phone, a portable device, a notebook computer, a ship, a spacecraft, an electric toy, an electric tool or the like. The vehicle may be a fuel car, a gas car or a new energy car, and the new energy car may be a pure electric car, a hybrid car, a range-extended car or the like; the spacecraft may include an airplane, a rocket, a space shuttle, a space ship or the like; the electric toy may include a fixed-type or mobile-type electric toy, such as a game player, an electric car toy, an electric ship toy, an electric airplane toy or the like; the power tool may include a metal cutting power tool, a grinding power tool, an assembly power tool and a railway power tools, such as an electric drill, an electric grinder, an electric wrench, an electric screwdriver, an electric hammer, an impact drill, a concrete vibrator, an electric planers or the like. Embodiments of the present application do not impose specific limitation to the above-mentioned electricity consuming apparatus.

It should be understood that the technical solution described in the embodiments of the present application is not only applicable to the battery and the electrical device described above, but also to all batteries including the housing and electrical devices using batteries, but for the convenience of explanation, the following embodiments are illustrated by taking the electric vehicle as an example.

Please refer to Fig. 2, and Fig. 2 shows a structural schematic diagram of a vehicle 1 provided in some embodiments of the present application. The vehicle 1 may be a fuel car, a gas car or a new energy car, and the new energy car may be a pure electric car, a hybrid car, a range-extended car or the like. A battery 2 may be disposed inside the vehicle 1, and the battery may be disposed in the bottom, the front or the back of the vehicle 1. The battery 2 may be configured to supply power to the vehicle 1, for example, the battery 2 may be used as an operating power source of the vehicle 1. The vehicle 1 may further include a controller 102 and a motor 101, the controller 102 may be used to control the battery to supply power to the motor 101, for example, for satisfying the work electricity needs of the vehicle 1 during starting, navigating and driving.

In some embodiments of the present application, the battery may not only serve as an operating power source for the vehicle 1, but also as a driving power source for the vehicle 1, so as to replace or partially replace the fuel or the natural gas and provide the driving power for the vehicle 1.

In order to meet different electricity needs, the battery 2 may include a plurality of battery cells, and the battery cell refers to the smallest unit that constitutes a battery module or a battery pack. The plurality of battery cells may be connected in series and/or in parallel through electrode terminals for various applications. The battery 2 mentioned in the present application includes the battery module or the battery pack. The plurality of battery cells may be connected in series, in parallel or in hybrid, and the hybrid connection refers to a combination of connections in series and in parallel. In the embodiments of the present application, the plurality of battery cells may directly form the battery pack, or may firstly form the battery module which then forms the battery pack.

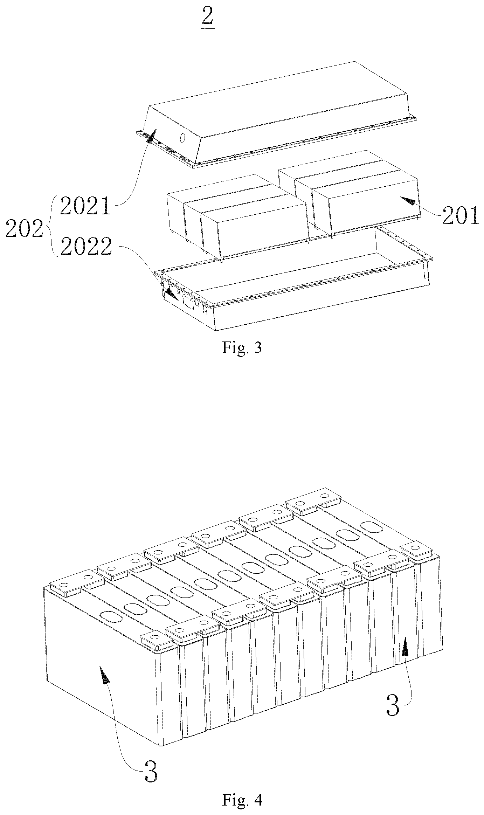

Fig. 3 shows a structural schematic diagram of the battery 2 in an embodiment of the present application.

As shown in Fig. 3, the battery includes a housing 202 and a battery cell (not shown in the figure), which is accommodated inside the housing 202.

The housing 202 may be a simple three-dimensional structure such as a single cuboid, cylinder, or sphere, or a complex three-dimensional structure constituted by a combination of simple three-dimensional structures such as a cuboid, cylinder, or sphere. The housing 202 may be made of alloy materials such as aluminum alloy and ferroalloy, or polymer materials such as polycarbonate, polyisocyanurate foam, or composite materials such as glass fiber and epoxy resin.

The housing 202 is configured to accommodate the battery cell, and the housing 202 may be of various structural forms. In some embodiments, the housing 202 may include a first housing portion 2021 and a second housing portion 2022. The first housing portion 2021 and the second housing portion 2022 cover with each other. The first housing portion 2021 and the second housing portion 2022 jointly define an accommodating space for accommodating the battery cell 3. The second housing portion 2022 may be of a hollow structure having an opening at an end, and the first housing portion 2021 may be of a plate-like structure. The first housing portion 2021 is covered at an opening side of the second housing portion 2022 to form the housing 202 including the accommodating space. Alternatively, each of the first housing portion 2021 and the second housing portion 2022 may be of a hollow structure having an opening on one side. An opening side of the first housing portion 2021 is covered at an opening side of the second housing portion 2022 to form the housing 202 including the accommodation space. Apparently, the first housing portion 2021 and the second housing portion 2022 may be in various shapes, such as a cylinder and a rectangular parallelepiped.

In order to improve the sealing performance after the first housing portion 2021 is connected with the second housing portion 2022, a sealing member, such as a sealant and a sealing ring, may be disposed between the first housing portion 2021 and the second housing portion 2022.

Assumed that the first housing portion 2021 is covered at top of the second housing portion 2022, the first housing portion 2021 may be referred to as an upper housing cover, and the second housing portion 2022 be referred to as a lower housing cover.

In the battery 2, there may be one battery cell or a plurality of battery cells. If a plurality of battery cells are provided, the plurality of battery cells may be connected in series, in parallel or in hybrid, and the hybrid connection means that the plurality of battery cells are connected in a combination of connections in series and in parallel. The plurality of battery cells may be directly connected together in series, in parallel or in hybrid, and then an entirety constituted by the plurality of the battery cells may be accommodated in the housing 202. Alternatively, the plurality of battery cells may be connected in series, in parallel or in hybrid to form the battery module 201, and then, a plurality of battery modules 201 are connected in series, in parallel or in hybrid to form an entirety and are accommodated in the housing 202.

Fig. 4 shows a structural schematic diagram of a battery module 201 according to an embodiment of the present application.

In some embodiments, as shown in Fig. 3 and Fig. 4, a plurality of battery cells 3 are provided. The plurality of battery cells 3 are firstly connected in series, in parallel or in hybrid to form the battery module 201. The plurality of battery modules 201 are then connected in series, in parallel or in hybrid to form an entirety and are accommodated in the housing 202.

The plurality of battery cells 3 in the battery module 201 may be electrically connected through a bus bar, to realize the parallel connection, the series connection or the hybrid connection of the plurality of battery cells 3 in the battery module 201.

In the present application, the battery cell 3 may include lithium ion battery cell, sodium ion battery cell, or magnesium ion battery cell, etc., and the embodiments of the present application are not limited thereto. The battery cell 3 may be of cylindrical, flat, rectangular or other shapes, and the embodiments of the present application are not limited thereto. The battery cell 3 is generally divided into three types according to the packaging manner: cylindrical battery cell, square battery cell, and soft-pack battery cell, and the embodiments of the present application are not limited thereto. However, for the sake of brevity, the following embodiments are all illustrated by taking the square battery cell 3 as an example.

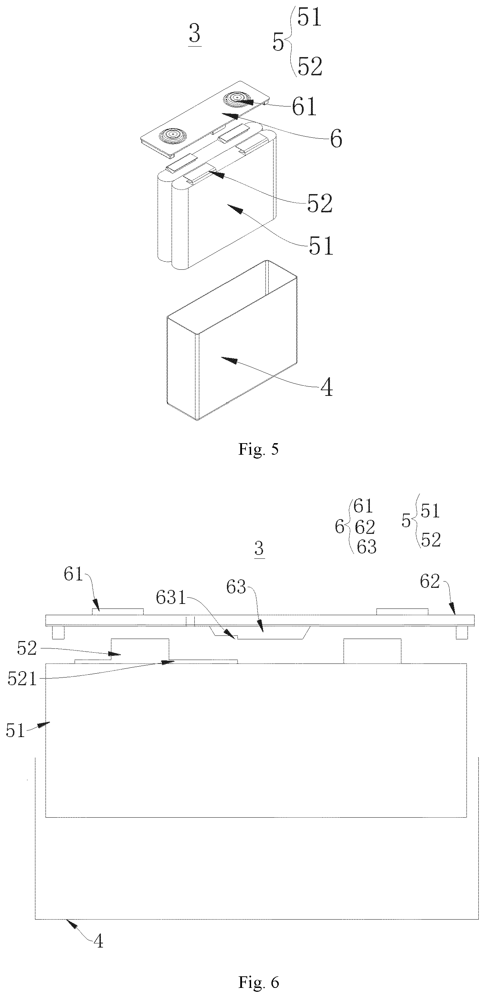

Fig. 5 shows a structural schematic diagram of the battery cell 3 provided in some embodiments of the present application. The battery cell 3 refers to the smallest unit that constitutes the battery. As shown in Fig. 5, the battery cell 3 includes a cap assembly, a casing 4, and an electrode assembly 5.

The electrode assembly 5 is an assembly in the battery cell 3 that undergoes electrochemical reaction. One or more electrode assemblies 5 may be included in the casing 4. The electrode assembly 5 is mainly formed by winding or stacking the electrode plates, which are divided into a positive electrode plate and a negative electrode plate, and a separator is generally provided between the positive electrode plate and the negative electrode plate. The portions of the positive and negative electrode plates with active material form the electrode body 51, while the portions of the positive and negative electrode plates without active material form the tabs 52 respectively. The positive and negative tabs may be located at one end of the main body together, or at two ends of the main body respectively. During the charging and discharging process of the battery, the positive and negative active materials react with the electrolyte, and the tab 52 is connected to the electrode terminal 61 to form a current circuit.

The casing 4 is an assembly configured to cooperate with the cap assembly 6 to form an internal environment of the battery cell 3, wherein the formed internal environment may be configured to accommodate the electrode assembly 5, the electrolyte (not shown in the figure), and other components. The casing 4 and the cap assembly 6 may be independent components, an opening may be provided on the casing 4, and the internal environment of the battery cell 3 may be formed by closing the opening at the cap assembly 6,. Optionally, the cap assembly 6 and the casing 4 may also be integral. Optionally, the cap assembly 6 and the casing 4 may firstly form a common connection face before other components enter the casing, and when the interior of the casing 4 is required to be encapsulated, the cap assembly 6 may be then covered onto the casing 4. The casing 4 may be of various shapes and sizes, such as rectangular, cylindrical, hexagonal, and the like. The shape of the casing 4 may be determined based on the specific shape and size of the electrode assembly 5. Various materials are available for the casing 4, and optionally, the material of casing 4 may be copper, iron, aluminum, stainless steel, aluminum alloy, plastic, or the like.

In some embodiments, as shown in Fig. 5, two electrode terminals 61 may be provided in the cap assembly 6. One electrode terminal 61 in the cap assembly 6 is electrically connected to one tab 52 (such as a positive tab) of the electrode assembly 5, and the other electrode terminal 61 in the cap assembly 6 is electrically connected to the other tab 52 (such as the negative tab) of the electrode assembly 5.

In some other embodiments, the casing 4 may be provided with two openings. The two openings are disposed on two opposite sides of the casing 4. Two cap assemblies 6 are provided. The two cap assemblies 6 cover the two openings of the casing 4 respectively. In this case, the electrode terminal 61 in the cap assembly 6 may be in number of one. The electrode terminal 61 in one cap assembly 6 is electrically connected to the tab 52 (such as a positive tab) of the electrode assembly 5, and the electrode terminal 61 in the other cap assembly 6 is electrically connected to the other tab 52 (such as the negative tab) of the electrode assembly 5.

Please refer to Fig. 6, and Fig. 6 shows a structural schematic diagram of the battery cell 3 provided in an embodiment of the present application.

In some optional embodiments, as shown in Fig. 6, the battery cell 3 includes a cap assembly 6 and an electrode assembly 5, the cap assembly 6 includes a cap plate 62 and an isolation member 63, and the isolation member 63 is disposed on one side of the cap plate 62; the electrode assembly 5 is disposed on a side of the isolation member 63 facing away from the cap plate 62, the electrode assembly 5 includes an electrode body 51 and tabs 52 protruding from the electrode body 51, a protrusion 521 connected with the electrode body 51 is provided on a peripheral side of at least one of the tabs 52; wherein a clearance groove 631 is provided on a surface of the isolation member 63 facing away from the cap plate 62 and is configured to accommodate at least a portion of the protrusion 521.

The cap plate 62 covers the opening of the casing 4, and the shape of the cap plate 62 may be the same as the opening of the casing 4. The cap plate 62 may also be of various structures, exemplarily, the cap plate 62 has a plate-like structure. Optionally, the cap plate 62 may be made of metals such as copper, iron, aluminum, stainless steel, aluminum alloy, or the like.

The isolation member 63 is disposed on one side of the cap plate 62. The isolation member 63 serves to fix and protect the electrode assembly 5, as well as to insulate the electrode assembly 5 from the cap assembly 6, preventing the problem of degradation of battery performance and short circuit caused by the displacement of the electrode assembly 5 under the action of external force. The isolation member 63 may be disposed on one side of the cap plate 62 through nesting, clamping, or bonding. The isolation member 63 may be formed by injection molding, and the shape of the isolation member 63 may be disposed to match with the shape of the cap plate 62.

Optionally, the isolation member 63 is integrally formed from polyphenyl sulfide (PPS) material, polysulfone (PSU) material, nanomaterial, or the like. PPS material, PSU material, and nanomaterial all have high temperature resistance, corrosion resistance, superior mechanical property and insulation property, which is beneficial to improve the service life of the isolation member 63, thereby improving the quality of the battery cell 3, and making the battery cell have good environmental protection and fire prevention performance to be more aligned with environmental requirements. In actual production, the user may use PPS material, PSU material, nanomaterial, or other suitable insulation material to form the isolation member 63 according to the structure and cost requirements of the battery cell 3.

The protrusion 521 may be connected to any position on the peripheral side of the tab 52, for example, the protrusion 521 is disposed at an end close to the electrode body 51 on the peripheral side of the tab 52. The protrusion 521 may be disposed on any tab 52. The protrusion 521 is connected to the tab 52 and the electrode body 51. The protrusion 521 increases the current-flowing area between the tab 52 and the electrode body 51, improving the battery performance.

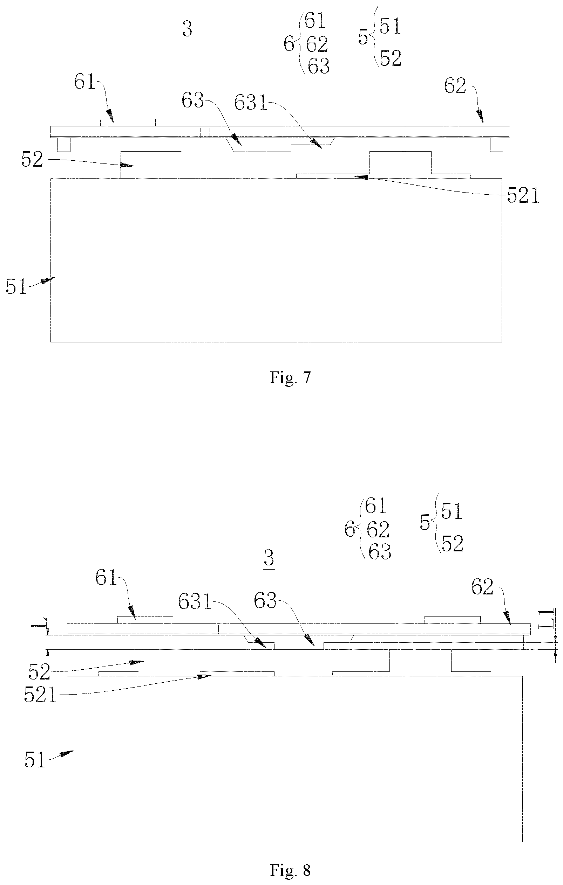

Please refer to Fig. 7, and Fig. 7 shows a structural schematic diagram of another battery cell 3 provided in an embodiment of the present application.

Optionally, as shown in Figs. 6 and 7, the protrusion 521 may be connected to any of the tabs 52, and the isolation member 63 is provided with a clearance groove 631 corresponding to the protrusion 521.

Please refer to Fig. 8, and Fig. 8 shows a structural schematic diagram of another battery cell 3 provided in an embodiment of the present application.

Optionally, as shown in Fig. 8, each of the tabs 52 is connected with the protrusion 521, and the isolation member 63 is provided with a plurality of clearance grooves 631 corresponding to a plurality of protrusions 521. Optionally, the clearance groove 631 and the isolation member 63 are formed in the same process, simplifying the process flow.

Optionally, a thickness of the clearance groove 631 may not be smaller than a thickness of the protrusion 521, avoiding interference of the isolation member 63 with the protrusion 521 under the action of external force.

In the battery cell 3 provided in the embodiment of the present application, the cap assembly 6 includes the cap plate 62 and the isolation member 63, the isolation member 63 is disposed on one side of the cap plate 62, and the electrode assembly 5 is disposed on a side of the isolation member 63 facing away from the cap plate 62. The electrode assembly 5 includes an electrode body 51 and tabs 52 protruding from the electrode body 51, and the protrusion 521 connected with the electrode body 51 is provided on a peripheral side of at least one of the tabs 52, increasing the current-flowing area between the tab 52 and the electrode body 51. The clearance groove 631 is provided on a surface of the isolation member 63 facing away from the cap plate 62 and accommodates at least a portion of the protrusion 521, improving the problem of insertion of the tab 52 caused by the interference of the isolation member 63 with the protrusion 521, improving the cooperation relationship between the isolation member 63 and the tab 52, and improving the battery performance.

In some embodiments, as shown in Fig. 8, at least a portion of an inner wall surface of the clearance groove 631 abuts against outer surface of the protrusion 521.

When the protrusion 521 tends to move under the action of external force, the inner wall surface of the clearance groove 631 abuts against the outer surface of the protrusion 521, and the clearance groove 631 can provide greater resistance to the protrusion 521 and improve the problem of degradation of battery performance caused by the misalignment of the protrusion 521, such as the tilting of the protrusion 521.

Optionally, at least a portion of the inner wall surface of the clearance groove 631 abuts against the surface of the protrusion 521 on a side facing away from the electrode body 51. The area of the surface of the protrusion 521 on a side facing away from the electrode body 51 is the biggest, and the abutment of this surface against the clearance groove 631 can effectively ensure the fixing effect of the clearance groove 631 on the protrusion 521 and save the cost.

In these embodiments, at least a portion of the inner wall surface of the clearance groove 631 abuts against the outer surface of the protrusion 521, allowing the isolation member 63 to limit the position of the protrusion 521, and improving the problem of short circuit of the battery caused by misalignment of the protrusion 521 under the action of external force.

In some embodiments, as shown in Fig. 8, in a direction from the cap plate 62 to the isolation member 63, a depth L1 of the clearance groove 631 accounts for 20% - 80% of a thickness L of the isolation member 63.

Optionally, the clearance groove 631 penetrates through the isolation member 63, and the clearance groove 631 with this design reduces the difficulty of machining the clearance groove 631.

Optionally, in a length direction of the isolation member 63, a length of the clearance groove 631 accounts for 15% - 35% of a length of the isolation member 63.

In these embodiments, the depth L1 of the clearance groove 631 accounts for 20% - 80% of the thickness L of the isolation member 63, preventing the clearance groove 631 from interfering with the protrusion 521 due to the depth L1 of the clearance groove 631 being too small, and also improving the insufficient limiting effect of the clearance groove 631 on the position of the protrusion 521 due to the depth of the clearance groove 631 being too excessive.

In some embodiments, as shown in Fig. 8, in the direction from the cap plate 62 to the isolation member 63, an orthographic projection of the clearance groove 631 coincides with an orthographic projection of the protrusion 521.

The clearance groove 631 abuts against the surface of the protrusion 521 facing away from the electrode body, and meanwhile, the orthographic projection of the clearance groove 631 coincides with the orthographic projection of the protrusion 521, and the clearance groove 631 also abuts fully against a side surface of the protrusion 521. At this time, the contact area between the clearance groove 631 and the protrusion 521 is the largest, and the clearance groove 631 provides the greatest resistance to the protrusion 521.

In these embodiments, the orthographic projection of the clearance groove 631 coincides with the orthographic projection of the protrusion 521, and the outer surface of the protrusion 521 abuts fully against the clearance groove 631. Thus, the clearance groove 631 provides the greatest resistance to the protrusion 521, and the clearance groove 631 has a greater limiting effect on the position of the protrusion 521.

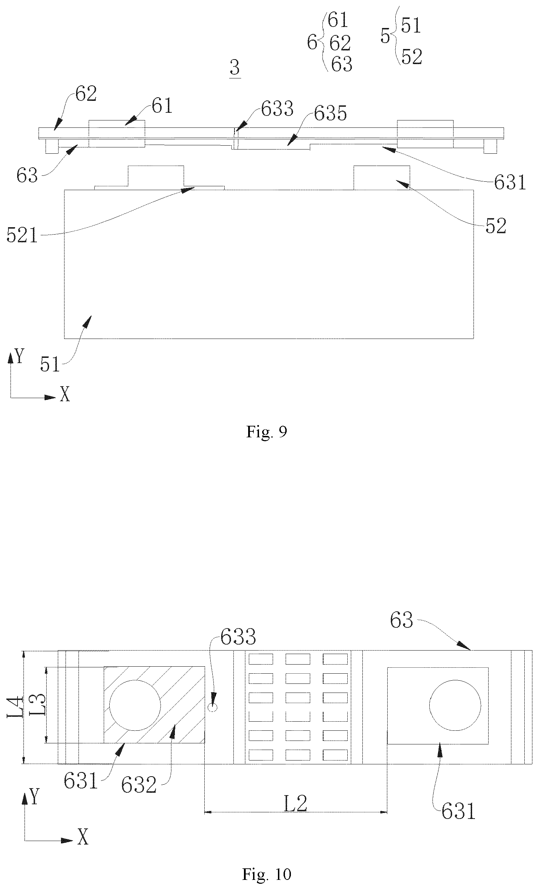

Please refer to Figs. 9 and 10, in which Fig. 9 shows a structural schematic diagram of another battery cell provided in an embodiment of the present application, and Fig. 10 shows a structural schematic diagram of an isolation member of another battery cell provided in an embodiment of the present application.

In some embodiments, as shown in Figs. 9 and 10, two or more clearance grooves 631 spaced apart along the first direction X are provided on the side of the isolation member 63 facing away from the cap plate 62; the electrode assembly 5 is provided with two or more protrusions 521 spaced apart along the first direction, and each of the protrusions 521 is correspondingly located in each of the clearance grooves 631. Alternatively, the electrode body 51 is provided with one protrusion 521, and the one protrusion 521 is located in one of the clearance grooves 631.

Optionally, the first direction is the X direction, and the second direction is the Y direction.

Two or more clearance grooves 631 spaced apart along the first direction X are provided on the side of the isolation member 63 facing away from the cap plate 62, the protrusion 521 is located in the clearance groove 631, in a thickness direction of the protrusion 521, the orthographic projection of the protrusion 521 is located within the orthographic projection of the clearance groove 631, and the clearance groove 631 may fully accommodate the protrusion 521. Therefore, in the production and manufacturing process, the isolation member 63 provided with the clearance groove 631 may be produced separately and matched with the electrode assembly 5 with various protrusions 521 of different shapes and sizes, saving the cost.

Optionally, the clearance grooves 631 spaced apart are of same size and shape, facilitating production and improving production efficiency.

Optionally, an elastic member 632 is disposed in the clearance groove 631, and the elastic member 632 is reciprocally deformable in a depth direction of the clearance groove 631, allowing that various protrusions 521 of different thicknesses may be configured in the clearance groove 631, improving the compatibility of the isolation member 63. The elastic member 632 may be made of insulating material, and a stiffness of the elastic member 632 is smaller than that of the isolation member 63, reducing the interference degree of the elastic member 632 with the protrusion 521. Meantime, the elastic member 632 may abut against the protrusion 521, functioning to limit the position of the protrusion 521.

Optionally, the elastic member 632 may be a buffer layer, a spring, a three-dimensional mesh filler, an elastic plate, or the like made of insulating polymer material.

In these embodiments, two or more clearance grooves 631 spaced apart along the first direction X are provided on the side of the isolation member 63 facing away from the cap plate 62; the electrode assembly 5 is provided with two or more protrusions 521 spaced apart along the first direction X, and each of the protrusions 521 is correspondingly located in each of the clearance grooves 631. Alternatively, the electrode body 51 is provided with one protrusion 521, and the one protrusion 521 is located in one of the clearance grooves 631. With such an arrangement, the clearance groove 631 disposed in this way may be compatible with various protrusions 521, improving the compatibility of the isolation member 63.

In some embodiments, as shown in Figs. 9 and 10, a distance L2 between the two clearance grooves 631 in the first direction X is at least 20% of the length of the cap assembly 6.

Optionally, in the second direction Y, a width L3 of the clearance groove 631 may not exceed 90% of a width L4 of the isolation member 63.

In these embodiments, the distance L2 between the two clearance grooves 631 is at least 20% of the length of the cap assembly 6, preventing a short circuit in the battery due to the electrode body 51 being misaligned, which is caused by the distance between the two clearance grooves 631 being too small and the fixing capacity of the isolation member 63 on the electrode body 51 being insufficient.

In some embodiments, as shown in Figs. 9 and 10, the two clearance grooves 631 are symmetrically disposed relative to an axis extending along the second direction Y, and the first direction X intersects with the second direction Y.

Optionally, the two clearance grooves 631 are of same shape and size.

In these embodiments, the symmetrically disposed clearance groove 631 has low machining difficulty and is convenient for manufacturing.

In some embodiments, as shown in Figs. 9 and 10, the isolation member 63 further includes a liquid injection hole 633 disposed to be penetrated, and the liquid injection hole 633 is staggered with the clearance groove 631.

The liquid injection hole 633 is a small hole that penetrates through the cap plate 62 and the isolation member 63, and is configured to fill the electrolyte into the electrode assembly 5.

In these embodiments, the liquid injection hole 633 is staggered with the clearance groove 631, preventing the protrusion 521 from blocking the liquid injection hole 633.

In some embodiments, as shown in Figs. 9 and 10, the isolation member 63 is provided with an abutment portion 635 protruding toward the electrode assembly 5, and the abutment portion 635 is configured to abut against the electrode body 51, and the clearance groove 631 is disposed at the abutment portion 635.

In these embodiments, the isolation member 63 includes an abutment portion 635 protruding toward the electrode assembly 5, and the abutment portion 635 abuts against the electrode body 51, improving the problem of short circuit in the battery caused by misalignment of the electrode body 5 under the action of external force.

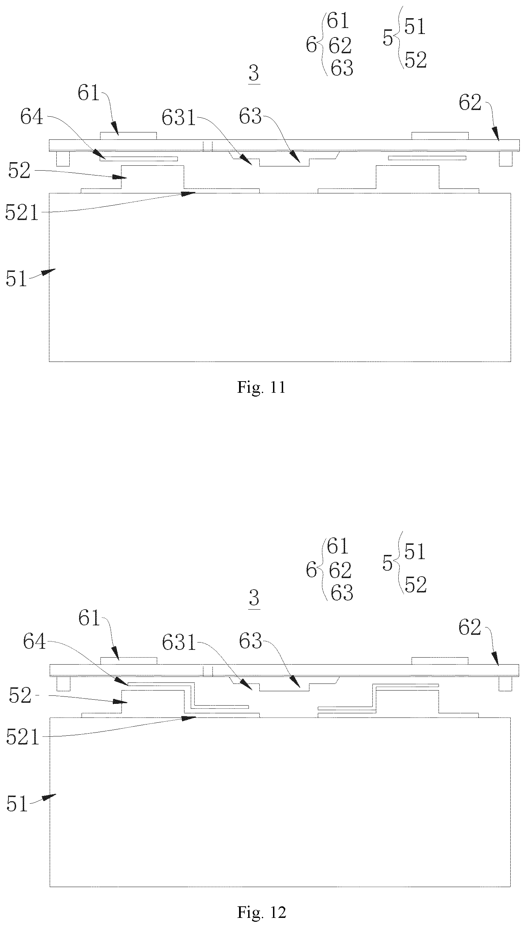

Please refer to Fig. 11, and Fig. 11 shows a structural schematic diagram of another battery cell 3 provided in an embodiment of the present application.

In some embodiments, as shown in Fig. 11, the battery cell further includes a connector 64, which is connected to the tab 52, and the connector 64 is staggered with the clearance groove 631.

The connector 64 is disposed between the tab 52 and the cap assembly 6, ensuring that the tab 52 and the cap assembly 6 may be connected through the connector 64 when the tab 52 cannot be directly aligned with the electrode terminal 61.

Since the protrusion 521 is disposed at an end of the tab 52 close to the electrode body 51 and the thickness of the protrusion 521 is smaller than that of the tab 52, after a portion of the connector 64 enters the clearance groove 631, the connector 64 will create a gap between the surface of the clearance groove 631 and the protrusion 521, reducing the limiting effect of the clearance groove 631 on the position of the protrusion 521.

Optionally, the connector 64 may be made of metal such as copper, iron, aluminum, stainless steel, aluminum alloy, or the like.

In these embodiments, the connector 64 is connected to the tab 52, and the connector 64 is staggered with the clearance groove 631, preventing the possibility of the clearance groove 631 not being able to abut against the protrusion 521 due to a portion of the connector 64 entering the clearance groove 631, and reducing the limiting effect of the isolation member 63 on the position of the tab 521.

Please refer to Fig. 12, and Fig. 12 shows a structural schematic diagram of another battery cell 3 provided in an embodiment of the present application.

In some embodiments, as shown in Fig. 12, the battery cell further includes a connector 64, which is connected to the protrusion 521, and at least a portion of the connector 64 is located in the clearance groove 631.

Optionally, the depth of the clearance groove 631 may not be less than a sum of the thickness of the connector 64 and the thickness of the protrusion 521.

In these embodiments, the connector 64 is connected to the protrusion 521, and at least a portion of the connector 64 is located in the clearance groove 631, ensuring that the isolation member 63 does not interfere with the protrusion 521 via the connector 64.

In some embodiments, as shown in Fig. 12, the clearance groove 631 is disposed between two adjacent tabs 52 in the first direction X.

Generally, most of the protrusions 521 are disposed between two tabs 52 adjacent in the first direction X, and only a small portion of the protrusion 521 is disposed at a portion outside the two tabs 52 adjacent in the first direction X. Due to the extremely small extending distance of the portion of protrusion 521 located outside the two tabs 52 in the first direction X, this portion of the protrusion 521 is subjected to less pressure from the isolation member 63, and meantime, due to the short torque, this portion of the protrusion 521 has a relatively high ability to resist deformation. Moreover, the difficulty in manufacturing the clearance groove 631 that corresponds to this portion of the protrusion 521 is relatively high, resulting in half the effort, and thus, the clearance groove 631 is disposed between two tabs 52 adjacent in the first direction.

In these embodiments, the clearance groove 631 is disposed between two tabs 52 adjacent in the first direction X, reducing process difficulty and saving the cost.

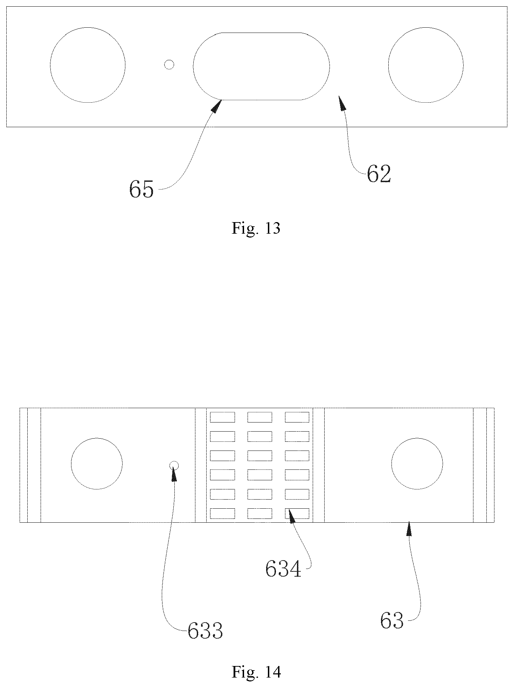

Please refer to Figs. 13 and 14, in which Fig. 13 shows a structural schematic diagram of the cap plate 62 of the battery cell 3 provided in an embodiment of the present application, and Fig. 14 shows a structural schematic diagram of the isolation member 63 of the battery cell 3 provided in an embodiment of the present application.

In some embodiments, as shown in Figs. 12 to 14, the battery cell further includes an explosion proof valve hole 65 that penetrates through the cap plate 62; the isolation member 63 is provided with a vent hole 634 in communication with the explosion proof valve hole 65, and the vent hole 634 is staggered with the clearance groove 631.

The explosion proof valve is configured to release the pressure inside battery cell 3 when the internal pressure or temperature of battery cell 3 reaches a threshold.

Optionally, the explosion proof valve is disposed in the middle of the cap plate 62.

The isolation member 63 is provided with a vent hole 634, which is configured to discharge gas from the battery cell 3.

Optionally, in the thickness direction of the isolation member 63, the orthogonal projection of at least a portion of the vent hole 634 coincide with the orthogonal projection of the explosion proof valve hole 651.

Optionally, the vent hole 634 is disposed in the middle of the isolation member 63.

Optionally, a plurality of the vent holes 634 are distributed on the isolation member 63 in rows and columns along the first direction X and the second direction Y.

In some embodiments, the isolation member 63 is provided with the vent hole 634 in communication with the explosion proof valve hole 65, and the explosion proof valve will not affect the breathability of the vent hole 634; the vent hole 634 is staggered with the clearance groove 631, preventing the protrusion from affecting the gas exhaust of electrode assembly 5 through the vent hole 634.

An embodiment of the present application also provides a battery, including the battery cell provided in the above embodiments.

The battery provided in the embodiment of the present application has the same technical effect due to the use of the battery cell provided in the above embodiments, and will not be further described here.

An embodiment of the present application also provides an electricity consuming apparatus, including the battery provided in the above embodiment, and the battery is configured to provide electrical energy.

The electricity consuming apparatus provided in the embodiment of the present application has the same technical effect due to the use of the battery provided in the embodiment of the present application, and will not be further described here.

Please refer to Figs. 2 to 14, according to some embodiments of the present application, the present application provides the battery cell 3 including the cap assembly 6 and the electrode assembly 5, the cap assembly 6 includes the cap plate 62 and the isolation member 63, and the isolation member 63 is disposed on one side of the cap plate 62.

The electrode assembly 5 is disposed on the side of the isolation member 63 facing away from the cap plate 62, the electrode assembly 5 includes the electrode body 51 and tabs 52 protruding from the electrode body 51, and the protrusion 521 connected with the electrode body 51 is disposed on the peripheral side of at least one of the tabs 52.

The clearance groove 631 is provided on the surface of the isolation member 63 facing away from the cap plate 62, the clearance groove 631 is disposed between two tabs 52 adjacent in the first direction, and the clearance groove 631 is configured to accommodate the protrusion 521; the inner wall surface of the clearance groove 631 abuts against the outer surface of the protrusion 521, and in the direction from the cap plate 62 to the isolation member 63, the orthographic projection of the clearance groove 631 coincides with the orthographic projection of the protrusion 521.

The isolation member 63 further includes the liquid injection hole 633 disposed to be penetrated, and the liquid injection hole 633 is staggered with the clearance groove 631; the connector 64 is connected to the tab 52, and the connector 64 is staggered with the clearance groove 631; the isolation member 63 is provided with a vent hole 634 in communication with the explosion proof valve hole 65, and the vent hole 634 is staggered with the clearance groove 631.

In these embodiments, the cap assembly 6 includes the cap plate 62 and the isolation member 63, and the isolation member 63 is disposed on one side of the cap plate 62; the electrode assembly 5 is disposed on the side of the isolation member 63 facing away from the cap plate 62, and the electrode assembly 5 includes the electrode body 51 and tabs 52 protruding from the electrode body 51, the protrusion 521 connected with the electrode body 51 is disposed on the peripheral side of at least one of the tabs 52, increasing the current-flowing area between the tab 52 and the electrode body 51; the clearance groove 631 is provided on the surface of the isolation member 63 facing away from the cap plate 62, and the clearance groove 631 accommodates at least a portion of the protrusion 521, improving the problem of insertion of the tab 52 caused by the interference of the isolation member 63 with the protrusion 521, improving the cooperation relationship between the isolation member 63 and the tab 52, and improving battery performance.

Although the present application has been described with reference to the preferred embodiments, various modifications may be made thereto. In particular, as long as there are no structural conflicts, the technical features mentioned in each of the embodiments can be combined in any way. The present application is not limited to the specific embodiments disclosed herein, but includes all technical solutions falling within the scope of the claims.

## Claims

1. A battery cell (3), comprising:
a cap assembly (6), comprising a cap plate (62) and an isolation member (63), the isolation member (63) being disposed on one side of the cap plate (62); and
an electrode assembly (5), disposed on a side of the isolation member (63) facing away from the cap plate (62), the electrode assembly (5) comprising an electrode body (51) and tabs (52) protruding from the electrode body (51), a protrusion (521) directly connected with the electrode body (51) being connected on a peripheral side of at least one of the tabs (52);
wherein a clearance groove (631) is provided on a surface of the isolation member (63) facing away from the cap plate (62), and is configured to accommodate at least a portion of the protrusion (521).

2. The battery cell (3) as claimed in claim 1, wherein at least a portion of an inner wall surface of the clearance groove (631) abuts against an outer surface of the protrusion (521).

3. The battery cell (3) as claimed in claim 2, wherein in a direction from the cap plate (62) to the isolation member (63), a depth L1 of the clearance groove (631) accounts for 20% - 80% of a thickness L of the isolation member (63).

4. The battery cell (3) as claimed in claim 2 or 3, wherein in a direction from the cap plate (62) to the isolation member (63), an orthographic projection of the clearance groove (631) coincides with an orthographic projection of the protrusion (521).

5. The battery cell (3) as claimed in claim 2, wherein two or more clearance grooves (631) spaced apart in a first direction (X) are provided on the side of the isolation member (63) facing away from the cap plate (62); and
the electrode assembly (5) is provided with two or more protrusions (521) spaced apart in the first direction (X), each of the protrusions (521) is located correspondingly in each of the clearance grooves (631); or the electrode assembly (5) is provided with one protrusion (521), and the one protrusion (521) is located in one of the clearance grooves (631).

6. The battery cell (3) as claimed in claim 5, wherein a distance between the two clearance grooves (631) in the first direction (X) is at least 20% of a length of the cap assembly (6).

7. The battery cell (3) as claimed in claim 5 or 6, wherein the two clearance grooves (631) are symmetrically disposed relative to an axis extending in a second direction (Y), and the first direction (X) intersects with the second direction (Y).

8. The battery cell (3) as claimed in any one of claims 1 to 7, wherein the isolation member (63) is provided with an abutment portion (635) protruding toward the electrode assembly (5), the abutment portion (635) is configured to abut against the electrode body (51), and the clearance groove (631) is disposed at the abutment portion (635).

9. The battery cell (3) as claimed in any one of claims 1 to 8, wherein the isolation member (63) further comprises a liquid injection hole (633) disposed to be penetrated, and the liquid injection hole (633) is staggered with the clearance groove (631).

10. The battery cell (3) as claimed in any one of claims 1 to 9, further comprising a connector (64), which is connected to the tab (52) and is staggered with the clearance groove (631).

11. The battery cell (3) as claimed in any one of claims 1 to 9, further comprising a connector (64), which is connected to the protrusion (521), and at least a portion of the connector (64) being located in the clearance groove (631).

12. The battery cell (3) as claimed in claim 5, wherein the clearance groove (631) is disposed between two tabs (52) adjacent in the first direction (X).

13. The battery cell (3) as claimed in any one of claims 1 to 12, further comprising an explosion proof valve hole (65) penetrating through the cap plate (62), wherein
the isolation member (63) is provided with a vent hole (634) in communication with the explosion proof valve hole (65), and the vent hole (634) is staggered with the clearance groove (631).

14. A battery (2), comprising the battery cell (3) as claimed in any one of claims 1 to 13.

15. An electricity consuming apparatus, comprising the battery (2) as claimed in claim 14, the battery (2) being configured to supply electric power.

## Patentansprüche

1. Batteriezelle (3), umfassend:
eine Kappenanordnung (6), umfassend eine Kappenplatte (62) und ein Isolierelement (63), wobei das Isolierelement (63) auf einer Seite der Kappenplatte (62) angeordnet ist; und
eine Elektrodenanordnung (5), die auf einer von der Kappenplatte (62) abgewandten Seite des Isolierelements (63) angeordnet ist, wobei die Elektrodenanordnung (5) einen Elektrodenkörper (51) und Laschen (52), die von dem Elektrodenkörper (51) vorstehen, umfasst, wobei an einer Umfangsseite mindestens einer der Laschen (52) ein Vorsprung (521), der direkt mit dem Elektrodenkörper (51) verbunden ist, verbunden ist;
wobei eine Freiraumnut (631) an einer von der Kappenplatte (62) abgewandten Oberfläche des Isolierelements (63) bereitgestellt ist und konfiguriert ist, um mindestens einen Abschnitt des Vorsprungs (521) aufzunehmen.

2. Batteriezelle (3) nach Anspruch 1, wobei mindestens ein Abschnitt einer Innenwandoberfläche der Freiraumnut (631) an einer Außenoberfläche des Vorsprungs (521) anliegt.

3. Batteriezelle (3) nach Anspruch 2, wobei in einer Richtung von der Kappenplatte (62) zum Isolierelement (63) eine Tiefe L1 der Freiraumnut (631) 20 % bis 80 % einer Dicke L des Isolierelements (63) ausmacht.

4. Batteriezelle (3) nach Anspruch 2 oder 3, wobei in einer Richtung von der Kappenplatte (62) zum Isolierelement (63) eine orthogonale Projektion der Freiraumnut (631) mit einer orthogonalen Projektion des Vorsprungs (521) zusammenfällt.

5. Batteriezelle (3) nach Anspruch 2, wobei zwei oder mehr in einer ersten Richtung (X) beabstandete Freiraumnuten (631) auf der Seite des Isolierelements (63), die der Kappenplatte (62) abgewandt ist, bereitgestellt sind; und
die Elektrodenanordnung (5) mit zwei oder mehr Vorsprüngen (521) versehen ist, die in der ersten Richtung (X) voneinander beabstandet sind, wobei sich jeder der Vorsprünge (521) entsprechend in jeder der Freiraumnuten (631) befindet; oder die Elektrodenanordnung (5) mit einem Vorsprung (521) versehen ist, und der eine Vorsprung (521) sich in einer der Freiraumnuten (631) befindet.

6. Batteriezelle (3) nach Anspruch 5, wobei eine Entfernung zwischen den beiden Freiraumnuten (631) in der ersten Richtung (X) mindestens 20 % einer Länge der Kappenanordnung (6) beträgt.

7. Batteriezelle (3) nach Anspruch 5 oder 6, wobei die beiden Freiraumnuten (631) symmetrisch relativ zu einer Achse, die sich in einer zweiten Richtung (Y) erstreckt, angeordnet sind und die erste Richtung (X) die zweite Richtung (Y) schneidet.

8. Batteriezelle (3) nach einem der Ansprüche 1 bis 7, wobei das Isolierelement (63) mit einem in Richtung der Elektrodenanordnung (5) vorstehenden Anschlagabschnitt (635) versehen ist, der Anschlagabschnitt (635) konfiguriert ist, um an dem Elektrodenkörper (51) anzuliegen, und die Freiraumnut (631) am Anschlagabschnitt (635) angeordnet ist.

9. Batteriezelle (3) nach einem der Ansprüche 1 bis 8, wobei das Isolierelement (63) ferner eine Flüssigkeitseinleitungsöffnung (633) umfasst, die angeordnet ist, um durchdrungen zu werden, und die Flüssigkeitseinleitungsöffnung (633) zur Freiraumnut (631) versetzt ist.

10. Batteriezelle (3) nach einem der Ansprüche 1 bis 9, ferner umfassend einen Verbinder (64), der mit der Lasche (52) verbunden ist und zur Freiraumnut (631) versetzt ist.

11. Batteriezelle (3) nach einem der Ansprüche 1 bis 9, ferner umfassend einen Verbinder (64), der mit dem Vorsprung (521) verbunden ist, wobei sich mindestens ein Abschnitt des Verbinders (64) in der Freiraumnut (631) befindet.

12. Batteriezelle (3) nach Anspruch 5, wobei die Freiraumnut (631) zwischen zwei Laschen (52), die in der ersten Richtung (X) benachbart sind, angeordnet ist.

13. Batteriezelle (3) nach einem der Ansprüche 1 bis 12, ferner umfassend eine Explosionsschutzventilöffnung (65), welche die Kappenplatte (62) durchdringt, wobei
das Isolierelement (63) mit einer Entlüftungsöffnung (634) versehen ist, die mit der Explosionsschutzventilöffnung (65) in Verbindung steht, und die Entlüftungsöffnung (634) zur Freiraumnut (631) versetzt ist.

14. Batterie (2), umfassend die Batteriezelle (3) nach einem der Ansprüche 1 bis 13.

15. Elektrizitätsverbrauchende Einrichtung, umfassend die Batterie (2) nach Anspruch 14, wobei die Batterie (2) konfiguriert ist, um elektrische Leistung zu liefern.

## Revendications

1. Cellule de batterie (3), comprenant :
un ensemble capuchon (6), comprenant une plaque de capuchon (62) et un élément d'isolation (63), l'élément d'isolation (63) étant disposé sur un côté de la plaque de capuchon (62) ; et
un ensemble électrode (5), disposé sur un côté de l'élément d'isolation (63) orienté à l'opposé de la plaque de capuchon (62), l'ensemble électrode (5) comprenant un corps d'électrode (51) et des pattes (52) dépassant du corps d'électrode (51), une saillie (521) raccordée directement au corps d'électrode (51) étant raccordée sur un côté périphérique d'au moins l'une des pattes (52) ;
dans laquelle une rainure de dégagement (631) est fournie sur une surface de l'élément d'isolation (63) orientée à l'opposé de la plaque de capuchon (62), et est conçue pour loger au moins une partie de la saillie (521).

2. Cellule de batterie (3) selon la revendication 1, dans laquelle au moins une partie d'une surface de paroi interne de la rainure de dégagement (631) vient en butée contre une surface externe de la saillie (521).

3. Cellule de batterie (3) selon la revendication 2, dans laquelle dans une direction de la plaque de capuchon (62) vers l'élément d'isolation (63), une profondeur L1 de la rainure de dégagement (631) représente de 20 % à 80 % d'une épaisseur L de l'élément d'isolation (63).

4. Cellule de batterie (3) selon la revendication 2 ou 3, dans laquelle dans une direction de la plaque de capuchon (62) vers l'élément d'isolation (63), une projection orthographique de la rainure de dégagement (631) coïncide avec une projection orthographique de la saillie (521).

5. Cellule de batterie (3) selon la revendication 2, dans laquelle deux rainures de dégagement (631) ou plus espacées dans une première direction (X) sont fournies sur le côté de l'élément d'isolation (63) orienté à l'opposé de la plaque de capuchon (62) ; et
l'ensemble électrode (5) est pourvu de deux saillies (521) ou plus espacées dans la première direction (X), chacune des saillies (521) est située en correspondance dans chacune des rainures de dégagement (631) ; ou l'ensemble électrode (5) est pourvu d'une saillie (521), et ladite saillie (521) est située dans l'une des rainures de dégagement (631).

6. Cellule de batterie (3) selon la revendication 5, dans laquelle une distance entre les deux rainures de dégagement (631) dans la première direction (X) est d'au moins 20 % d'une longueur de l'ensemble capuchon (6).

7. Cellule de batterie (3) selon la revendication 5 ou 6, dans laquelle les deux rainures de dégagement (631) sont disposées de manière symétrique par rapport à un axe s'étendant dans une deuxième direction (Y), et la première direction (X) coupe la deuxième direction (Y).

8. Cellule de batterie (3) selon l'une quelconque des revendications 1 à 7, dans laquelle l'élément d'isolation (63) est pourvu d'une partie butée (635) dépassant vers l'ensemble électrode (5), la partie butée (635) est conçue pour venir en butée contre le corps d'électrode (51), et la rainure de dégagement (631) est disposée au niveau de la partie de butée (635).

9. Cellule de batterie (3) selon l'une quelconque des revendications 1 à 8, dans laquelle l'élément d'isolation (63) comprend en outre un trou d'injection de liquide (633) disposé de sorte à être pénétré, et le trou d'injection de liquide (633) est décalé par rapport à a rainure de dégagement (631).

10. Cellule de batterie (3) selon l'une quelconque des revendications 1 à 9, comprenant en outre un connecteur (64), qui est connecté à la patte (52) et est décalé par rapport à la rainure de dégagement (631).

11. Cellule de batterie (3) selon l'une quelconque des revendications 1 à 9, comprenant en outre un connecteur (64), qui est connecté à la saillie (521), et au moins une partie du connecteur (64) est située dans la rainure de dégagement (631).

12. Cellule de batterie (3) selon la revendication 5, dans laquelle la rainure de dégagement (631) est disposée entre deux pattes (52) adjacentes dans la première direction (X).

13. Cellule de batterie (3) selon l'une quelconque des revendications 1 à 12, comprenant en outre un trou de valve antidéflagrante (65) pénétrant à travers la plaque de capuchon (62), dans laquelle
l'élément d'isolation (63) est pourvu d'un trou d'évent (634) en communication avec le trou de valve antidéflagrante (65), et le trou d'évent (634) est décalé par rapport à la rainure de dégagement (631).

14. Batterie (2), comprenant la cellule de batterie (3) selon l'une quelconque des revendications 1 à 13.

15. Appareil de consommation d'électricité, comprenant la batterie (2) selon la revendication 14, la batterie (2) étant conçue pour fournir de l'énergie électrique.
